# EUROPEAN PATENT APPLICATION

(11) **EP 2 270 909 A1**
(43) Date of publication of application: **05.01.2011**
(21) Application number: 09275044.7
(22) Date of filing: 15.06.2009
(51) Int. Cl.: H01M 6/40, H01M 10/04, H01M 4/04, H01M 10/0565, H01M 10/0525, H01M 10/0585, H01G 9/00

(54) **Electrical Engergy Storage Device and Methods of Manufacturing Same**

(71) Applicant: BAE Systems PLC, 6 Carlton Gardens London SW1Y 5AD (GB)
(72) Inventor: Dunleavy, Michael, Bristol, BS34 7QW (GB); Haq, Sajad, Bristol, BS34 7QW (GB); Hucker, Martyn John, Bristol, BS34 7QW (GB)
(74) Representative: BAE SYSTEMS plc Group IP Department

(57) **Abstract**

According to the invention there is provided a method of manufacturing an electrical energy storage device on a substrate, wherein the electrical energy storage device includes a plurality of operationally active device elements which, in use, operate together to allow electrical energy to be stored in the device and to be removed from the device, the method including the step or steps of forming at least one operationally active device element by depositing material in a spraying process.

## Description

This invention relates to electrical energy storage devices and methods of manufacturing same.

The invention is particularly directed towards batteries and capacitors, although the invention relates also to other forms of electrical energy storage devices, such as supercapacitors (also known as electric double-layer capacitors, electrochemical double-layer capacitors, and ultracapacitors). Batteries and capacitors have traditionally been thought of as "stand-alone" units, which are subsequently installed at a point of use by way of making appropriate electrical connections. The manufacture of batteries and capacitors has traditionally been performed by way of assembling separately produced components, and, in the case of batteries, in some instances a liquid electrolyte is introduced at the point of manufacture.

The present inventors have developed a different approach to the manufacture of electrical energy storage devices which moves away from the traditional concepts of batteries and capacitors as separate items assembled from a plurality of separately produced components. In at least some of its embodiments, the present invention enables electrical energy storage devices to be manufactured in situ, i.e. at an intended position of use with respect to a larger ensemble which utilises the electrical energy storage device. The present invention, in at least some of its embodiments, can provide other advantages which will be described in more detail below.

According to a first aspect of the invention there is provided a method of manufacturing an electrical energy storage device on a substrate, wherein the electrical energy storage device includes a plurality of operationally active device elements which, in use, operate together to allow electrical energy to be stored in the device and to be removed from the device, the method including the step or steps of forming at least one operationally active device element by depositing material in a spraying process.

Preferably, each operationally active device element is formed by depositing material onto the substrate in a spraying process. For the avoidance of doubt, the term "formed by depositing material onto the substrate" includes reference to both direct deposition onto a substrate surface, and also indirect deposition, wherein the electrical energy storage device includes a plurality of stacked layers on top of the substrate. In the latter instance, the skilled reader will appreciate that material may be deposited onto a lower layer in the stack rather than directly onto the substrate. Also for the avoidance of doubt, the term "polymer" as used herein is understood to include reference to co-polymers as well as homopolymers, the term 'micro scale' as used herein refers to a scale in the range 1 to 999 microns, and the term 'nano scale' as used herein refers to a scale in the range 1 to 999 nm.

The substrate may be physically distinct from the operationally active device elements. Alternatively, at least a portion of the substrate may form part of one of the operationally active device elements.

Typically, at least one of the operationally active device elements is an electrode or current collector structure. Advantageously, an electrode or current collector structure is formed in a spraying process selected from: spraying micro or nano scale metal particles; spraying micro or nano scale carbon particles; spraying a conductive polymer; electroless metal plating; and flame spraying a metal. Mixtures of these materials may be utilised. A variety of advantageous nano particulate materials, such as carbon nanotubes and "spiky" nickel can be utilised as at least part of the electrode or current collector structure.

In some electrical energy storage devices, at least one of the operationally active device elements is a dielectric layer. Advantageously, the dielectric layer may be formed by spraying a ceramic powder or a non-conductive polymer.

The electrical energy storage device may be a battery. In these embodiments, the operationally active device elements typically include: an anode current collector; an anode structure; one or more structures which serve as an electrolyte and/or as a separator; a cathode structure; and a cathode current collector.

The electrical energy storage device may be a primary cell or a secondary cell.

An example of a primary cell which may be manufactured in accordance with the invention is a metal-air cell. The metal-air cell may be an aluminium-air cell, a zinc-air cell, or, preferably, a lithium-air cell. Advantageously, the metal-air cell has an anode structure which is formed by spraying micro or nano scale metal particles.

Examples of secondary cells are a lithium ion polymer cell or a NiFe cell.

Advantageously, where the secondary cell is a NiFe cell, the anode structure is formed by spraying micro or nano scale nickel particles, and the cathode structure is formed by spraying micro or nano scale iron particles.

In embodiments in which the secondary cell is lithium ion polymer cell, it is preferred that the cathode structure is formed by spraying a layer which includes a lithium ion containing polymer. The lithium ion polymer containing layer may contain at least one of LiCoO, LiMnO, and LiFePO. Advantageously, the lithium ion polymer containing layer consists of a mixture of a lithium ion polymer with other active additives, such as carbon particles, e.g., carbon black or carbon nanotubes.

With lithium ion polymer cells, the anode structure may be formed from materials such as carbon nanotubes, carbon black, lithium-titanate or combinations thereof.

The structure or structures which serve as an electrolyte and/or as a separator can be formed by spraying any suitable material or combinations of materials including polymers which contain and conduct lithium ions, and gelled aqueous electrolytes together with appropriate matrix materials and fillers. With batteries, the current collectors may be formed in the manner described above.

In some preferred embodiments of batteries, at least one of the anode structure and the cathode structure is formed by spraying micro or nano scale carbon particles, preferably carbon nanotubes.

Alternatively, the anode structure of a battery may be formed by spraying micro or nano scale metal particles.

In other embodiments, the electrical energy storage device is a capacitor having first and second spaced apart electrodes separated by one or more dielectric layers. The electrodes and the dielectric layer may be formed in the manner described above. In other embodiments still, the electrical energy storage device is a supercapacitor.

The method may further include the step of forming at least one protective layer on the device by depositing material in a spraying process. The protective layer may be formed on one surface of the device, for example as an upper, capping layer. Alternatively, one or more protective layers may be formed on a plurality of surfaces of the device. The device may be encapsulated by one or more protective layers. The protective layer may be used to provide environmental, electrical and/or mechanical protection. The protective layer may be permeable or impermeable to certain substances, depending on the precise application envisaged. For example, a metal-air cell may be provided with a protective layer which is permeable to oxygen, and an oxygen permeable siloxane, may be used for this purpose. Advantageously, a further protective layer may be provided which is impervious to oxygen and which may be peeled off in order to activate the metal-air cell. An aluminised polyester may be used to provide an oxygen impervious, removable protective layer.

The electrical energy storage devices of the invention may be formed on a range of substrates, for example fabrics (natural and man-made), metals, composite materials, ceramics and polymers. It will be appreciated that the present invention can be utilised in a very wide range of technical areas and applications. For example, electrical energy storage devices can be incorporated into clothing for personal use or into other items readily transported by a person, such as backpacks. In other non-limiting examples, electrical energy storage devices can be incorporated into constructional features such as buildings, or into vehicles. An advantage of the invention is that retro-fitting of an electrical energy storage device to an existing element is possible through a convenient spraying process.

Each spraying process step may be implemented in a variety of ways. For example, a spraying process step may include spraying an operationally active material, or a precursor thereof, in combination with a supporting matrix material, or a precursor thereof, to form a layer, and curing said layer. A precursor of an operationally active material may be one or more monomers, optionally in combination with an initiator, e.g. a lithium ion conductive polymer electrolyte may be formed by spraying a mixture including one or more lithium salts, and one or more monomers in combination with an initiator, followed by the application of heat to produce polymerisation. One or more lithium salts may be dissolved in a polyethylene oxide monomer such as poly(ethylene glycol) acrylate monomers for this purpose. An example of a precursor of a supporting matrix material is one or more monomers, optionally in combination with an initiator, e.g. a curable epoxy resin.

Other kinds of operationally active material may be sprayed in the form in which they are to be used, i.e. not in a precursor form. For example, carbon nanotubes may be sprayed in combination with a suitable carrier which is subsequently polymerised.

Curing may be performed by suitable techniques such as chemical treatment, heat treatment and/or evaporation.

Spraying is a convenient manner of depositing operationally active device elements which permits the thickness of the deposited layers to be readily controlled. For example, devices of invention may be formed as bulk devices or thin film devices.

An operationally active material, or a precursor thereof, may be blended with or dispersed in the supporting matrix material or a precursor thereof, in accordance with methodologies which are well known to the skilled reader. Fillers may be added in order to provide desired physical properties, such as flexibility, stiffness, bulk or environmental resistance. A spray may be produced as an aerosol, by a nebulisation process or by another 'atomisation' techniques. The term "spraying is used to embrace a wide range of techniques for applying a layer or film which are well known to the skilled reader, such as a gravity fed spraying, inkjet printing, airbrush printing, rolling, dipping, hand spraying; stencilling, screen printing, direct writing, electroless plating and flame spraying. The spraying may include spraying one or more reagents which react during the spraying or after they reach the surface to from a substance or compound; for example the reagent or reagents may be for an electroless plating process. A plurality of electrical energy storage devices may be produced on a single substrate, or on a single structure or element. The electrical energy storage devices may be electrically connected and the electrical connections may be formed by spraying as part of the manufacturing process. Devices may, for example, be connected in a series or parallel. Patterns or arrays of devices may be manufactured. It is possible to provide a mask or to otherwise conceal a portion of the target area during manufacture in order to create apertures, for example for provide through connections.

According to a second aspect of the invention there is provided an electrical energy storage device on a substrate including a plurality of operationally active device elements which, in use, operate together to allow electrical energy to be stored in a device and to be removed from the device, in which at least one operationally active device element is a layer of spray deposited material.

The device of the second aspect of the invention may be manufactured using any method as described above in connection with the first aspect of the invention.

In another aspect of this invention there is provided a method of producing an electrical storage device comprising a multilayer structure in which at least two of the layers are formed by spraying (as herein defined) respective superimposed layers.

Whilst the invention has been described above, it extends to any inventive combination of the features set out above, or in the following description, drawings and claims.

Embodiments of methods and electrical energy storage devices in accordance with the invention will now be described with reference to the accompanying drawings, in which:-
Figure 1 is a cross sectional view of a battery device of the invention; and
Figure 2 is a cross sectional view of a capacitor device of the invention.

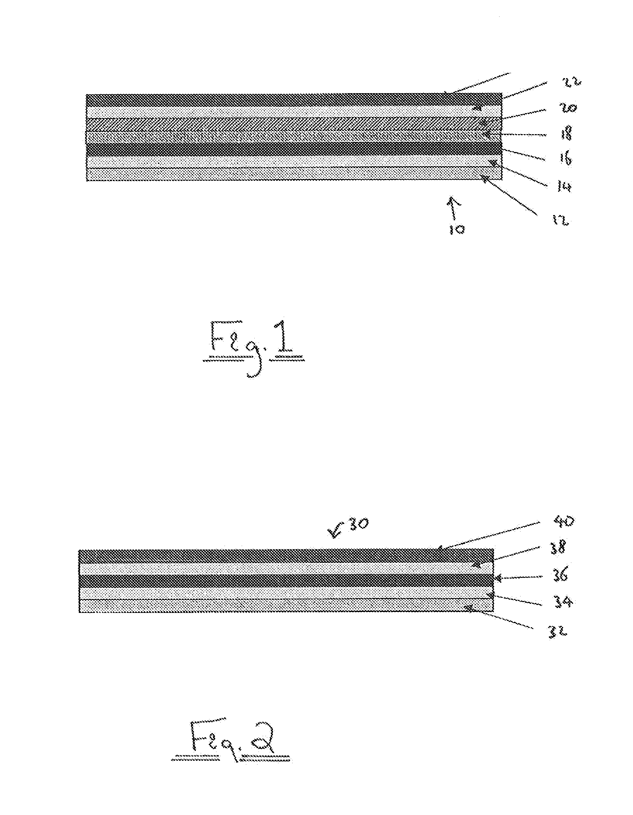

Figure 1 depicts a generic battery device invention, shown generally at 10, formed on a substrate 12. The battery device 10 comprises an anode current collector 14 formed directly on the substrate 12, an anode 16 formed on the anode current collector 14, an electrolyte/separator layer 18 formed on the anode 16, a cathode 20 formed on the electrolyte/separator layer 18, a cathode current collector 22 formed on the cathode 20, and a capping layer 24 formed on the cathode current collector 22.

Each component of the battery 14 - 24 is present as a layer which is formed on the substrate 12 by a spraying process. The anode current collector 14 and cathode current collector 20 can be formed from micro or nano scale metal or carbon particles, conductive polymers, electroless plated metal such as copper or gold, or flame sprayed metal. Carbon nanotubes may be used to form the current collectors. It is possible to use mixtures of these materials as well.

It is possible to manufacture a range of different types of cell using the present invention. For example, a lithium ion polymer secondary cell, a NiFe secondary cell or a metal-air primary cell may be formed using present invention. Representative lithium ion polymer cells can use carbon nanotubes, carbon black, and/or lithium-titanate as the anode, and LiCoO, LiMnO, LiFePO or any mixture thereof in combination with carbon black and/or carbon nanotubes as the cathode. Representative NiFe cells can use micro or nano scale nickel particles in the anode, and micro or nano scale iron particles in the cathode. Representative metal-air cells can use micro or nano scale aluminium, zinc or lithium particles in the anode and a manganese containing compound such as manganese dioxide in combination with carbon nanotubes and/or carbon black in the air cathode. The electrolyte/separator layer can be formed from appropriate constituents such as lithium ion containing conductive polymers, gelled aqueous electrolytes, and appropriate matrix and filler materials. For example, lithium salts may be dissolved in poly(ethylene glycol) acrylate monomers or other poly ethylene oxide monomers to form a mixture which is polymerised to produce the electrolyte/separator layer. The capping layer is present to provide desired environmental, mechanical and/or electrical protection. In the case of a metal-air cell, a capping layer is formed from a material which is permeable to oxygen such as an oxygen permeable siloxane (e.g. poly(dimethylsiloxane)). Advantageously, in the case of metal-air cells, a further capping layer is provided as an outer layer. The further capping layer is formed from a material which is impervious to oxygen such as aluminised polyester. The further capping layer may be peeled off from the battery device 10, which allows the device to be activated as required by the action of peeling off the further capping layer.

Figure 2 depicts a generic capacitor device, shown generally at 30, formed on a substrate 32. The capacitor device 30 comprises a first electrode 34 formed on the substrate 32, a dielectric layer 36 formed on the first electrode 34, a second electrode 38 formed on the dielectric layer 36, and a capping layer 40 formed on the second electrode 38. Each of the layers 34 - 40 are formed by spraying processes. The first and second electrodes 34, 38 can be formed in the same way as the anode and cathode current collectors 14, 22 described above in connection with Figure 1. The dielectric layer 36 can be formed in a spraying process which deposits ceramic powders or non-conductive polymers.

### Example 1

A fibre glass mat (200gsm plain weave E-glass fabric supplied by East Coast Fibre Glass Limited, South Shields, UK) was spray coated with a high electrical permittivity coating material comprising finely ground (to the sub millimetre level) K1700 ceramic powder (Morgan Electro Ceramics, Ruabon, Wrexham, UK), an epoxy resin (Struers general purpose epoxy resin) and butyl acetate solvent sufficient to adjust viscosity for that suitable for spray coating with a De Vilbiss gravity fed spray gun. A typical ratio of ceramic to resin is in the range 3.5 to 5 parts by weight of ceramic to one part by weight of resin. The amount required to produce a mixture of a consistency that can be sprayed depends on the ceramic loading and the ambient temperature, but it typically in the range of 1 to 5 parts by weight. The solvent is allowed to evaporate and the coated mat is allowed to cure. Once cured, the mat is sequentially spray coated with an electroless plating process (HE-300 electroless silver supplied by Peacock Laboratories, Philadelphia PA, USA). The edges of the mat were then trimmed to prevent shorting of the capacitor. Alternatively, the edges of the mat could be masked using suitable means such as removable water impermeable tape or a polymer coating.

In related experiments, toluene was used a solvent. Additionally, in place of sequential spraying, sequential dipping of the ceramic impregnated mat can be undertaken in order to plate it.

### Example 2

A spray deposited capacitor was produced in accordance with Example 1, except that, instead of using an electroless deposition process to produce the electrodes, a well dispersed metal in a solvent carrier was sprayed onto the ceramic impregnated mat. In related examples, carbon or carbon nanotubes dispersed in a solvent were sprayed onto the ceramic impregnated mat. It is preferable to have an electrical connection in place (such as adhesive copper tape) prior to spraying. The structure formed by this procedure was then encapsulated by spraying with a suitable polymer such as poly dimethylsiloxane in a butyl acetate or toluene solvent carrier.

It will be appreciated that the capacitor devices of Examples 1 and 2 differ from the generic capacitor structure shown in Figure 2, since, in the Examples, the substrate is treated to act as the dielectric layer.

There are numerous advantages associated with the present invention. It is possible to provide a variety of electrical energy storage devices in a convenient manner, and such devices may be produced in situ. Additionally, it is possible to retrofit to existing substrate structures. Devices of the invention can exhibit improved weight distribution and improved resistance to mechanical shocks. Furthermore, the invention is compatible with a wide range of substrate materials. Depending on the choice of substrate material, it is possible to produce electrical energy storage devices which are highly conformal. Advantageously, devices having large active areas can be produced. This can be achieved through the use of nano particulate active materials such as carbon nanotubes and spiky nickel. Enhanced interfacial effects, such as interfacial polarisation, can be achieved through the generation of thin layers. Further advantages are that devices can be formed without any unnecessary packaging structures, resulting in devices of lighter weight, and that devices of the invention can be conveniently produced at a desired location.

Techniques such as stencilling, screen printing or direct write methods can be used to incorporate patterned structures, apertures, arrays and other structures, thereby providing additional functionality. A plurality of devices can be produced in a desired arrangement, permitting power distribution and energy management in a system to be controlled. Inductive loops might be incorporated for wireless energy transfer between systems or structures which incorporate devices of the invention. In other variations, fuse links might be provided for internal protection, and low profile electrode connections might be manufactured. Arrays of devices can be produced, permitting device redundancy to be integrated into a system.

Devices of the invention can be used for a number of purposes. Devices may be used purely to supply electrical energy to a desired location, or may be used in energy recovery, for example as part of a regenerative breaking system in a vehicle.

## Claims

1. A method of manufacturing an electrical energy storage device on a substrate, wherein the electrical energy storage device includes a plurality of operationally active device elements which, in use, operate together to allow electrical energy to be stored in the device and to be removed from the device, the method including the step or steps of forming at least one operationally active device element by depositing material in a spraying process.

2. A method according to Claim 1 in which each operationally active device element is formed by depositing material onto the substrate in a spraying process.

3. A method according to Claim 1 or Claim 2 in which at least one operationally active device element is an electrode or current collector structure.

4. A method according to Claim 3 in which an electrode or current collector structure is formed in a spraying process selected from: spraying micro or nano scale metal particles, spraying micro or nano scale carbon particles, spraying a conductive polymer, electroless metal plating, and flame spraying metal.

5. A method according to any previous Claim in which at least one operationally active device element is a dielectric layer.

6. A method according to Claim 5 in which a dielectric layer is formed by spraying a ceramic powder or a non-conductive polymer.

7. A method according to any previous claim in which the electrical energy storage device is a battery.

8. A method according to Claim 7 in which the battery is a metal-air cell having an anode structure, and the anode structure is formed by spraying micro or nano scale metal particles.

9. A method according to Claim 7 in which the battery is a NiFe cell having an anode structure formed by spraying micro or nano scale nickel particles and a cathode structure formed by spraying micro or nano scale iron particles.

10. A method according to Claim 7 in which the battery is a lithium ion polymer cell having a cathode structure, and the cathode structure is formed by spraying a layer including a lithium ion containing polymer.

11. A method according to Claim 7 in which the battery includes an anode structure and a cathode structure, and at least one of the anode structure and the cathode structure is formed by spraying micro or nano scale carbon particles, preferably carbon nanotubes.

12. A method according to any one of Claims 1 to 6 in which the electrical energy storage device is a capacitor having first and second spaced apart electrodes separated by one or more dielectric layers.

13. A method according to any previous Claim in which the substrate is selected from the group comprising: a fabric, a metal, a composite material, a ceramic, and a polymer.

14. A method according to any previous Claim in which at least one step includes spraying an operationally active material, or a precursor thereof, in combination with a supporting matrix material, or a precursor thereof, to form a layer, and curing said layer.

15. An electrical energy storage device on a substrate including a plurality of operationally active device elements which, in use, operate together to allow electrical energy to be stored in the device and to be removed from the device, in which at least one operationally active device element is a layer of spray deposited material.
